# EUROPEAN PATENT APPLICATION

(11) **EP 0 741 376 A2**
(43) Date of publication of application: **06.11.1996**
(21) Application number: 96400445.1
(22) Date of filing: 01.03.1996
(51) Int. Cl.: G07B 17/04

(54) **Encrypted mail monitoring and data retrieval system**

(30) Priority: 03.05.1995 US 433113
(71) Applicant: UNITED STATES POSTAL SERVICE, Washington DC 20260 (US)
(72) Inventor: Mampe, John J., Bendersville, Pennsylvania 17306-0445 (US); Stephens, Michael L., Oakton, Virginia 22124-2718 (US); Dowling, William J., Great Falls, Virginia 22066-3021 (US)
(74) Representative: Fréchède, Michel

(57) **Abstract**

An encrypted mail monitoring and data retrieval system (10) employing POSTNET (Postal Numeric Encoding Technique) PLANET (Postal Alpha-Numeric Encoding Technique) and CONFIRM (Computerized On-Line Notification For Inbound Reply Mail) techniques to allow the U.S.P.S. to read, record, collect, transmit and retrieve encrypted data on articles of mail (1). The data is indicative of the origin, content, location, destination, etc. pertaining to the individual articles of mail; and, the USPS will then selectively transmit portions of the collected data to subscribers of the new system.

## Description

The present invention relates to the field of mail handling systems in general, and in particular to a dual encryption system for mail that allows encrypted data to be recorded, stored, transmitted and collected by a monitoring system so that the generated data may be systematically and/or selectively retrieved by authorized entities.

As can be seen by reference to the following U.S. Patent Nos. 4,637,051; 4,641,347; 4,660,221 and 4,743,747, the prior art is replete with myriad and diverse mail handling systems.

While all of the aforementioned patented systems are more than adequate for the particular purpose and function for which they have been specifically designed, these prior art systems fall far short of the goals and objectives that formed the motivating influence for the development of the mail monitoring system that forms the basis of the present invention.

In fact, this particular invention takes the general teachings and structures that are well represented in the prior art and encompasses them into a new broad based system, that provides distinct advantages to both the U.S. Postal Service, and their customers, in a new and unique fashion.

Up until the present time, there has not existed a method of tracking an article of mail through the postal system in real time nor has there been any method of determining that an article of mail was deposited by an identifiable entity at a known origin and destined for an identifiable recipient, while the article of mail was enroute to its ultimate destination.

As a consequence of the foregoing situation, there has existed a long standing need by both the U.S. Postal Service and their customers for a new type of mail monitoring system that will provide access to data regarding articles of mail such as origin, destination, present location, time enroute, etc.; and the provision of such a system is a stated objective of the present invention.

Briefly stated, the encrypted mail monitoring and data retrieval system that forms the basis of the present invention involves the combination of two new and unique systems developed by the United States Postal Service that work in conjunction with the existing POSTNET (Postal Numeric Encoding Technique) barcode system to create a permanent retrievable record of the location, origin, destination, content, time of receipt, and time in transit of articles of mail processed by the U.S. Postal Service.

The first portion of this invention is identified by the acronym PLANET which stands for Postal Alpha-Numeric Encoding Technique; wherein, each PLANET application consists of at least 2 parties: the U.S.P.S. and the original mailer, called the subscriber. Some applications also include a third party: a mutual customer, or someone who is using the mailstream to send mail to the subscriber.

Subscribers place a PLANET code on each of their mailpieces, in addition to the POSTNET code. The POSTNET code always identifies the physical destination for that article, be it a house, a firm, or post office box, or the subscriber's fixed receiving point(s). The PLANET code is structured to identify other items, such as the subscriber, a subscriber's customer, an account number, or for outbound foreign mail, the destination country and abbreviated postal code.

The PLANET code can be used as an electronic address
- the destination for electronic information regarding the article. The POSTNET code, however, always continues to represent the physical destination of the article, which also can be the electronic address for mail being returned to the subscriber, except for foreign mail where only the PLANET code may appear.

The second portion of this invention is identified by the acronym CONFIRM which stands for Computerized On-Line Notification For In-Bound Reply Mail and is embodied in two versions: Destination CONFIRM which provides information to a subscriber regarding the delivery of an article of mail, and Origin CONFIRM which provides information to a subscriber regarding an article entering the mailstream. Both of these versions combined pro vide the U.S.P.S. with the ability to electronically determine service status.

As will be explained in greater detail further on in the specification, this invention in essence involves a systematized and standardized method and process wherein information can be encoded by an organization using PLANET, read by the USPS and real time transaction information communicated back to the subscribing organization, and/or the USPS for their internal use by CONFIRM.

The USPS currently uses a tall/short bar symbology, POSTNET, for automatic processing of letter and flat mail. This symbology represents, in machine readable form, the ZIP, ZIP+4, or delivery point location for which the article is destined. POSTNET was developed for domestic mail processing. The number of digits in the code determines the number of bars in the POSTNET pattern. An additional digit is used as a check digit to accommodate recognition errors. No other information is encoded in the POSTNET symbology. Other symbologies are used in the delivery of items such as parcels, bundles, and containers or sacks, although with improvements in reading technology POSTNET and PLANET could be applied to such articles, or the data contained in POSTNET and PLANET can be applied to other sized articles in a symbology appropriate to their size.

Applications for tall/short bar barcodes have been developed by the U.S. Postal Service over the years, and since they have adopted the POSTNET code, other companies have begun to use POSTNET like systems to identify mailpiece content or other pertinent information. These applications are generally very limited in scope to the organization applying the code.

Companies currently apply marks (e.g., barcodes) that identify the destination of the article to which they are applied. The new barcode and association technology, called PLANET, will provide the recipient or originator with pertinent electronic information prior to delivery of the physical item.

PLANET has a multitude of applications, including, though not limited to, advance payment notification, electronic debit authorization, automatic notification of undeliverable articles, advance receipt notification or impending delivery confirmation, electronic manifest generation/confirmation, and article tracking/tracing.

Origin CONFIRM is designed to electronically notify a subscriber when an article has just entered the processing stream. This is a "check's in the mail" system.

Articles that are candidates for Origin CONFIRM would contain the current POSTNET code along with a PLANET code. The PLANET code would identify the customer, or person mailing the article back to the subscriber. The POSTNET code would identify the subscriber's physical and electronic address.

As soon as an Origin CONFIRM article is processed, both the POSTNET and PLANET codes (along with date/time, facility - a mail piece record) are stored locally.

These records are periodically forwarded to regional sites, which then share all the records with other regions.

Destination CONFIRM is designed to electronically notify a subscriber that an article has been, or is nearing, delivery to the customer.

Articles that are candidates for Destination CONFIRM would contain the current POSTNET code along with a PLANET code. The PLANET code would identify the subscriber's electronic address. The POSTNET code would identify the customer's physical address.

At the last point in the delivery process, both the POSTNET and PLANET codes (along with date/time, facility - an article record) are stored locally. These records are periodically forwarded to regional sites, which then share all records with other regions.

In both the Origin CONFIRM and Destination CONFIRM the subscribers, identified by their POSTNET code, would then receive the records electronically. Only those records for a subscriber would be provided, and all information would be encrypted for both privacy and security reasons. The subscribers could then use this information for any applications as will be explained in greater detail further on in the specification.

With both Origin and Destination CONFIRM, the USPS records data on each processing stage which can be used for internal monitoring of its processes.

These and other objects and advantages of the present invention will become more apparent upon a thorough study of the following description of the best mode for carrying out the invention, particularly when reviewed in conjunction with the drawings, wherein:
- Fig. 1 is a schematic diagram of the apparatus that are employed in accordance with the teachings of this invention to practice the method embodied in this invention;
- Fig. 2 is a schematic flow chart depicting the interaction between the PLANET and CONFIRM systems of this invention; and
- Fig. 3 is one example of an article of mail employing the teachings of this invention.

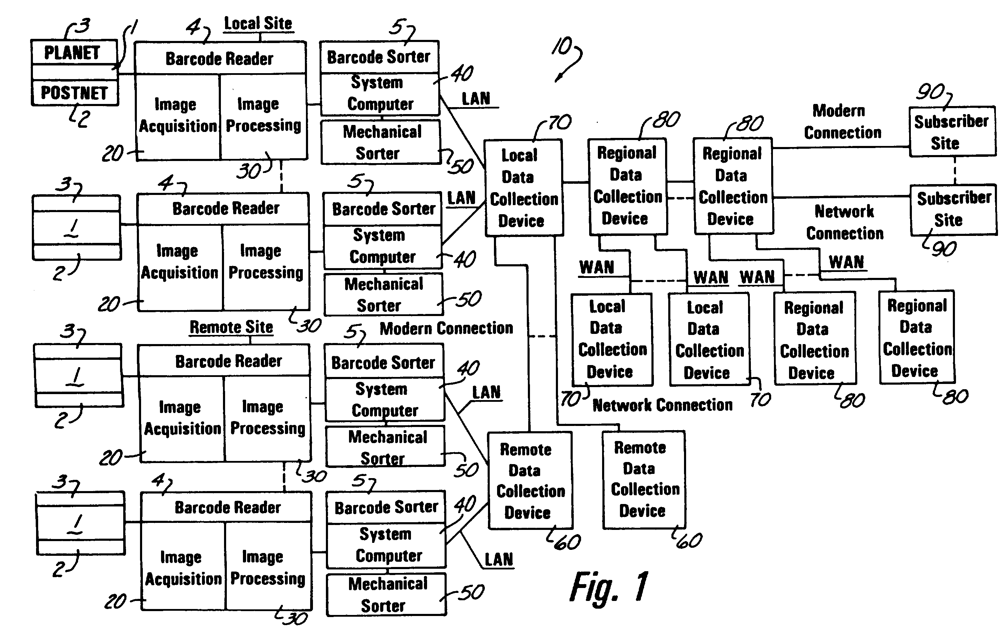

As can best be seen by reference to the drawings, and in particular to Fig. 1, the encrypted mail monitoring and data retrieval system that forms the basis of the present invention is designated generally by the reference numeral 10. The system 10 comprises in general, an image acquisition unit 20 an image processing unit 30 a system computer unit 40 a mechanical sorter unit 50 a remote data collection unit 60 a local data collection unit 70 a regional data collection unit 80 and a subscriber data receiving unit 90. These units will now be described in seriatim fashion.

As shown in Fig. 1, an article of mail 1 having both a POSTNET barcode 2 and PLANET encrypted code 3 imprinted thereon are fed into barcode readers 4 at both local and remote U.S.P.S. collection sites, wherein each of the barcode readers 4 are provided with an image acquisition unit 20 and an image processing unit 30.

The image acquisition unit 20 electronically scans the article of mail 1 and transmits 8-bit digital greyscale video information along with the necessary timing signals to the image processing unit 30, wherein, the digitized image consists of dots or pixels. The image processing unit 30 receives the article image from the image acquisition unit 20 and the image is then processed such that any barcodes and pertinent data for encryption within the image are located, read and decoded.

The resulting decoded barcodes are then transmitted to the barcode sorter 5. The image processing unit 30 transmits the ASCII-representation of the POSTNET code and the PLANET code in digital, via a parallel interface, to the barcode sorter 5. In the case where a particular code is not read, a reject code is provided to the barcode sorter 5.

Other external sensors, mounted on the barcode sorter, such as those that detect certified mail, have their data electronically merged with the POSTNET and PLANET code record.

Examples of barcode readers 4 having an image acquisition unit 20 and an image processing unit 30 suitable for use in conjunction with the teachings of this invention would be the U.S.P.S. Wide Area Bar Code Reader No. 1002499 or the Electrocom Automation E 4000.

Associated with the barcode reader 4 is a barcode sorter 5 such as the ECA Barcode Sorter 880 or 990 having a system computer unit 40 which receives the decoded barcode information from the barcode reader 4 and other sensors, translates the decoded information into a bin assignment and transmits that digital information to the mechanical sorter unit 50. In addition, the system computer unit 40 transmits all decoded barcode information, along with the date/time, and facility location for each article of mail 1 to either a remote data collection unit 60 or a local data collection unit 70.

For the purpose of this specification, the terms barcode reader and barcode sorter are to be understood as encompassing any device that includes the image acquisition and image processing functions with respect to the barcode reader and any device including a system computer and mechanical sorter with respect to the barcode sorter.

The system computer unit 40 provides the appropriate data collection unit 60 or 70 with the POSTNET and PLANET codes along with the time, date, and location at which each article 1 is processed. In addition, the system computer also notifies via a network connection such as Ethernet, the appropriate data collection unit 60 or 70 of the type of processing such as sort plan or operation number as well as the identification of the machine performing the processing.

Examples of system computer units 40 suitable for use in conjunction the system 10 of this invention would be the Everex Step 25 or the Intel 320.

The mechanical sorter unit 50 receives the bin information from the system computer unit 40 and directs the article of mail 1 to the appropriate bin location on the sorter unit 50. The system computer unit 40 also receives information back from the mechanical sorter unit 50 for gathering statistics such as number of jams, throughput, etc., as well as monitoring machine performance such as diagnostics, or the like. This information is transmitted digitally with the format and content varying with the particular machine type.

The remote data collection unit 60 exists at remote sites, or those being served by larger local sites. The remote data collection unit 60 records all of the article records from the remote site sorters and stores them on a local storage device. Information stored at the remote data collection unit 60 is made available to the local data collection unit 70.

The remote data collection stores the PLANET, POSTNET, date/time and other information received from the system computer. This same information is made available to local data collection communication with the local data collection is via a modem or network.

The local data collection unit 70 exists at local sites, or those serving remote sites, but served by regional sites. The local data collection unit 70 records all of the article records from the local site sorters and stores them on a local storage device. The local data collection unit 70 also requests and records all of the article records from the remote data collection unit 60. Information stored at the local data collection unit 70 is made available to the regional data collection unit 80 via a modem or network.

The local data collection unit 70 receives POSTNET 2, PLANET 3, date/time, and other information from the local barcode sorters. It also receives the same data format from the remote data collection units 60. All of these data are made available to the regional data collection unit 80. Communication with the remote data collection units 60 is via a modem of network. Communication with the regional data collection units 80 is via a dedicated network.

The regional data collection unit 80 exists at regional sites, the highest level in the data collection scheme. The regional data collection unit 80 records all of the article records from the local data collection units 70, and thus the remote data collection units 60. Information stored at the regional data collection unit 80 is made available to all other regional data collection units 80.

The regional data collection unit 80 receives the POSTNET 2, PLANET 3, date/time, and other information from the local data collection units 70. This information is passed to other regional data collection units 80 via a dedicated network.

Each subscriber to the system 10 will be electronically linked via a subscriber data receiving unit 90 to the regional data collection unit 80 nearest their site. Since all regional data collection units 80 share their information, the subscriber thus has access to all article records throughout the entire system.

The data the subscriber receives is first "massaged" by the regional data collection units. The type of service in which the subscriber is interested dictates the form in which the data is modified. For instance, subscribers for Origin CONFIRM are only interested in the first record generated by an article, and not the subsequent downstream processing results. Subscriber for Destination CONFIRM would only receive the last record generated by an article. Internal U.S.P.S. tracking/tracing functions would receive every record an article generates; and the subscriber data receiving unit 90 would receive the desired preselected data via modem or network.

As can best be appreciated by reference to Fig. 1 through 3, the encrypted mail monitoring and data retrieval system 10 that forms the basis of the present invention provides a means of accessing useful data for both the U.S.P.S. and their subscribers which should prove to be very beneficial not only to those directly involved with the system, but also to the general public as well.

As an article containing both codes is processed by U.S.P.S. automation, both the POSTNET 2 and PLANET 3 codes are read and, along with other information, 8 such as date/time, facility, stored on a local data collection unit 70. The ability to read the additional barcode is provided through the use of new software. No hardware modifications are required.

The local data collection units 70 periodically gather identical information from systems within that postal facility as well as remote data collection units 60 in the general area.

Regional data collection units 80 periodically gather the information from all of the local data collection units 70. This information is then shared among all regional data collection units 80. This is the basis for PLANET - the storage and forwarding or sharing of electronic information obtained from an article in the mail stream.

Subscribers then have access to the regional data collection devices. Depending on the type of application, some or all of the information stored is then electronically transferred to the subscriber. The information is clustered by the POSTNET address, for the case of mail being routed back to the subscriber, or by PLANET for the case of a subscriber's outbound mail, where the POSTNETs represent their customers' delivery addresses. Also, depending on the application, the data may be electronically altered/encrypted before transmission, to better serve the subscriber's needs.

Ultimately, the subscriber receives information regarding every article generated by the subscriber that is processed through the automated equipment. This information can then be used for many applications, including automatic account debiting, data base modification, and staff management, monitoring date of delivery so that advertising in papers or over the airwaves can be coordinated, as well as other applications.

With Origin CONFIRM, subscribers would know exactly how many articles are within the automated system in transit to their site. This information could be used to adjust staffing so that adequate resources are readily available upon receipt of the articles. Conversely, this information could be used to reduce unneeded resources.

Many subscribers see customers notices when payment has not been received. Many times, these notices are not needed, since the customer's payment is in transit. With Origin CONFIRM, subscribers could instantly determine whether an item is in the mail stream, and thus save the cost of sending late notices.

As soon as a subscriber is notified that a customer is about to receive an article, such as an advertising or marketing piece, the subscriber could use other advertising media, such as newspapers, radio and TV, to further the impact of the campaign. This could conceivably greatly improve customer response.

Since the PLANET code uniquely identifies the customer, subscribers could use Origin CONFIRM or Destination CONFIRM to automatically, and electronically, debit a customer's account. This would enable customers to easily pay bills without having to physically write checks, while still having control over the timing of the payment process. Customers desiring certification that the subscriber has received the debit authorization could add a certified label to their CONFIRM mail piece. This label is automatically detected at the time the POSTNET and PLANET codes are read. The data record includes this information when it is transmitted to the subscriber. The U.S. Postal Service maintains a record that this piece has been detected and the data transmitted to the subscriber. The subscriber electronically notifies the U.S. Postal Service of the customers address and that his authorization has been received. The U.S. Postal Service then maintains that information on file for electronic query or at a site close to the customer, prepares a receipt for delivery to the customer depending upon the service requested.

Many subscribers are interested in turn-around time. That is, the time a customer takes to respond to an article. In combination with Origin CONFIRM, Destination CONFIRM provides subscribers with the times at which a customer both receives and then returns an article. This information can then be used to gauge media effectiveness. Consistently long response times could indicate that the advertising copy should be changed to better entice the customer.

Regardless of the CONFIRM service, the data collection devices collect all article records. This includes those records generated during intermediate processing steps. Since CONFIRM provides information regarding both the entry point and time, and the delivery point and time, service standards can be electronically monitored. The information can then be used to locate problem distribution areas, and in the case of equipment failures, be used to route articles away from potential delays.

As previously stated, a record is created for all PLANET articles. This provides the ability to track an individual article from origin to destination. Thus, an article's location can be reasonably located.

Another application of Destination CONFIRM is the notification to a subscriber of an article that is not deliverable. This information could be useful for the subscriber, who would want to maintain the most up-to-date customer list possible.

Like Destination CONFIRM, the PLANET code identifies the subscriber. The POSTNET code, however, would identify a customer whose address is no longer valid. In this scenario, the subscriber would be provided with a list of POSTNET codes that are no longer correct. If the customer has moved, and the U.S.P.S. has a record of the customer's new location, the subscriber could also be provided a list of corrected POSTNET codes and addresses.

Another application for PLANET is the processing of inbound and outbound foreign mail. This is the only application in which the PLANET code is used to represent the physical destination of the article being processed.

The PLANET codes used for Foreign Mail Processing consists of two leading digits which identify the destinating country. The remaining digits identify the postal code for the physical destination of the article.

An additional application for PLANET is the confirmation that a customer's manifest matches the articles submitted for processing. In the U.S.P.S. environment, this would provide that ability to verify a mailer's manifest versus the actual make-up of the mailing (i.e., presort sequence, rates, etc.).

In this application, the processing rate (postage), subscriber id(our customer), the customer id(the subscriber's customer), and day-of-the-week are encoded within the PLANET code. The barcode reader reads and decodes the PLANET code, which is then recorded by the barcode sorter PC. At the end of the processing, the PC generates a manifest detailing the make-up and sequence of the mailing, which can then be manually or electronically compared to the manifest provided by the bureau submitting the mailing.

The present invention relates to image processing and more particularly to a technique for immediately providing valuable business data on time-sensitive mail items to business mailers as items are received into postal mail processing. The invention further covers all pre-encrypted or postal applied data on the mailpiece or mailpiece insert that is to be used for business advantage to the Postal Service.

The following example is meant to illustrate the concept of dual system encryption and postal processing but not to limit the scope of applications for which this concept is suitable and the invention applies.

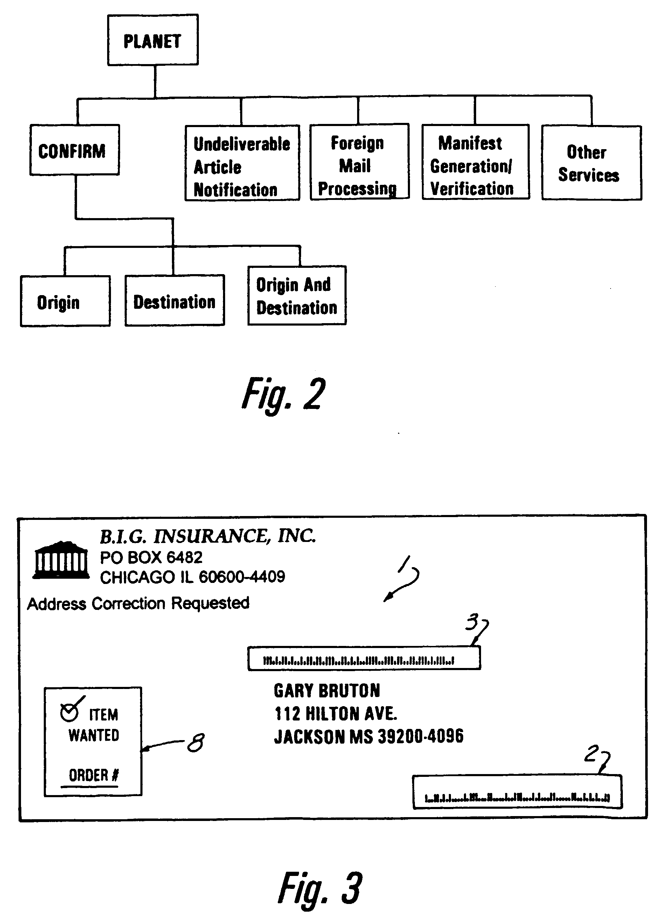

The example depicted in Fig. 3 shows an envelope pre-printed with an identification pattern, including a destinating address code and an encryption code. The intelligence contained on the face of the envelope has a high business value when presented with immediacy to the mailer. The identification mark is used by postal automation equipment to identify the mailpiece as a candidate for enhanced service image handling. The full image of the mailpiece is captured for processing. The mailpiece continues in the automated postal mailstream. The image data is for the full face of the mailpiece and contains both traditional address data and the encrypted information placed on the mailpiece by the mailer. The image data is processed immediately via computer to analyze the image intelligence and determine the business data of interest. For the mailpiece shown in Fig. 3, the items of interest may be, name/address of sender, time mailpiece image was captured, account number, payment amount, estimated time mailpiece will be delivered. This data record is placed in a telecommunications "mailbox" together with all other instances of candidate mailpieces for this mailer. At convenient intervals the mailer will poll and empty his mail box of business data. The physical mailpiece will be delivered per usual in this case. This completes the process.

A similar process can be implemented to scan the full reverse side of the mailpiece when the subscribers POSTNET codes reveal that that service is desired. Those mailpieces would either be turned around and refed on a transport containing a single mailpiece scanner, or be processed on a transport with scanners to scan both sides.

Having thereby described the subject matter of the present invention, it should be apparent that many substitutions, modifications and variations of the invention are possible in light of the above teachings. It is therefore to be understood that the invention as taught and described herein is only to be limited to the extent of the breadth and scope of the appended claims.

## Claims

1. An encrypted mail monitoring and data retrieval system for allowing encrypted data to be read, collected, transmitted, shared and retrieved by authorized users of the system; wherein, the system comprises:
- first means for reading and collecting encrypted data from individual articles of mail passing through the mailstream at multiple locations;
- second means for communicating between said multiple locations for the purpose of sharing collected encrypted data;
- third means for transmitting collected encrypted data between selected ones of said multiple locations; and,
- fourth means for selectively retrieving said collected encrypted data from at least one of said multiple locations.

2. The system as in claim 1; wherein, at least a portion of the encrypted data on each article of mail is generated by an alpha-numeric encoding technique.

3. The system as in claim 1; wherein, said multiple locations include remote, local and regional locations.

4. The system as in claim 1; wherein, said first means includes a barcode reader having an image acquisition unit and an image processing unit for decoding the encrypted data.

5. The system as in claim 1; wherein, said second means includes a barcode sorter having a system computer unit operatively associated with data collection units at selected ones of said multiple locations.

6. The system as in claim 1; wherein said third means includes a local area network, a wide area network or a local area and wide area network.

7. The system as in claim 1; wherein said fourth means includes a modem connection, a network connection or a modem and a network connection.

8. The system as in claim 3; wherein, said remote and local locations are connected via a local area network.

9. The system as in claim 3; wherein, said local and regional locations are connected via a wide area network.

10. The system as in claim 3; wherein, all of the collected encrypted data is selectively available at said regional locations for authorized users of the system.

11. An encrypted mail monitoring and data retrieval system for allowing encrypted data to be read, collected, transmitted, shared and retrieved by authorized users of the system; wherein, the system comprises:
- first means for reading and collecting encrypted data from individual articles of mail passing through the mailstream at multiple locations;
- second means for communicating between said multiple locations for the purpose of sharing collected encrypted data;
- third means for transmitting collected encrypted data between selected ones of said multiple locations;
- fourth means for selectively retrieving said collected encrypted data from at least one of said multiple locations, wherein said authorized users include the postal service, a subscriber, and a customer; and
- fifth means for allowing the customer to be notified by the postal service when the subscriber is in receipt of electronic data, transmitted by the postal service to the subscriber.

12. A method of reading, collecting, monitoring and retrieving selected variable encrypted data on articles of mail as they flow through the mailstream from a source of origin to an ultimate destination; wherein the variable encrypted data includes such information as: origin, destination, postage, content, time, date, facility location, meter validation, etc. including the steps of:
1) feeding the articles of mail through encryption decoding stations at remote, local and regional locations within the mailstreams to generate information;
2) transmitting the generated information from the remote and local encryption decoding stations to regional data collection devices;
3) sharing the collected information between the regional collection devices; and,
4) making selected portions of the collected information available to authorized entities.

13. A method of providing advance notification to a postal service patron of various encrypted data present on an article of mail that is en route to said patron including the steps of:
1) scanning and recording the encrypted data on all articles of mail that contain encoded information identifying the patron as the recipient of the articles of mail deposited at various postal service locations;
2) collecting and sharing the recorded data from all postal service locations with at least one central location;
3) providing the patron with means for retrieving from said at least one central location, selected decoded data from the encrypted data appearing on the articles of mail which identify the patrons as the recipient of the article of mail.

14. An encrypted mail monitoring and data retrieval system, wherein variable encrypted data is provided on an article of mail by at least one identifiable party and portions of the encrypted data are processed during handling by the postal service and made available to authorized users of the system; wherein, the system comprises
- scanning means for recording images of successive conveyed articles of mail bearing encrypted data;
- reading means for reading, decoding and recording the encrypted data;
- collection means for collecting the data from a plurality of scanning and reading means at a variety of locations;
- transmitting means for transmitting the collected data to at least one central location; and,
- authorized user accessing means for retrieving selected data regarding portions of the encrypted data.

15. An encrypted mail monitoring and data retrieval system for the accumulation, recording, and selective dissemination of encrypted data processed by the postal service, wherein the system includes
- remote, local and regional facilities for processing articles of mail bearing encrypted data;
- automated means at each facility for scanning, reading, recording and transmitting encrypted data from said articles of mail;
- data collection means for receiving and sharing the accumulated encrypted data between said regional facilities; and
- electronic retrieval means for providing restricted access to selected portions of the accumulated data from a regional facility by authorized users of the system.

16. The system as in claim 15; wherein the encrypted data is provided by at leat the postal service, an authorized user of the system or a third party.

17. A data retrieval method for monitoring a variety of bits of information including the origin, destination, content, and real time location of an article of mail within the postal system including the steps of:
1) encrypting a portion of one face of the article of mail with both a numeric and alpha-numeric encryption code containing bits of information;
2) passing the article of mail through automated scanning devices which both read and record the encrypted data on the article of mail;
3) collecting the recorded data from all of the automated scanning devices at all locations throughout the postal system;
4) transmitting all of the collected data to at least one central location within the postal system;
5) electronically retrieving selective bits of information from the collected data; wherein, the bits of information relate to an identifiable entity; and,
6) transmitting the selective bits of information to said identifiable entity.

18. The method as in claim 17 further comprising the intermediate step of:
7) imprinting and recording encoded information relative to the time, date, machine and location on each article of mail as it passes through any of the automated scanning devices within the postal system.

19. A data retrieval method for monitoring a variety of bits of information including the origin, destination, content, and real time location of an article of mail within the postal system including the steps of:
1) encrypting a portion of more than one face of the article of mail with a numeric and/or alpha-numeric encryption code containing bits of information;
2) passing the article of mail through automated scanning devices which both read and record the encrypted data on the article of mail;
3) collecting the recorded data from all of the automated scanning devices at all locations throughout the postal system;
4) transmitting all of the collected data to at least one central location within the postal system;
5) electronically retrieving selective bits of information from the collected data; wherein, the bits of information relate to an identifiable entity; and,
6) transmitting the selective bits of information to said identifiable entity.

20. The method as in claim 19 further comprising the intermediate step of:
7) imprinting and recording encoded information relative to the time, date, machine and location on each article of mail as it passes through any of the automated scanning devices within the postal system.
